(19)

Europäisches
Patentamt
European
Patent Office
Office européen
des brevets

(11) **EP 4 556 876 A1**

(12) **EUROPEAN PATENT APPLICATION**

(43) Date of publication:
21.05.2025 Bulletin 2025/21

(21) Application number: 23306971.5

(22) Date of filing: 14.11.2023

(51) International Patent Classification (IPC):
*G01M 11/02* (2006.01)     *A61B 3/00* (2006.01)
*A61B 3/04* (2006.01)

(52) Cooperative Patent Classification (CPC):
**G01M 11/0285**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Essilor International
94220 Charenton-Le-Pont (FR)**

(72) Inventors:
• NG, Jinhhao
 570443 Singapore (SG)
• DING, Xingzhao
 339338 Singapore (SG)
• FU, Chit Yaw
 S530166 Singapore (SG)
• LIU, Yu Richard
 600220 Singapore (SG)

(74) Representative: **Jacobacci Coralis Harle
32, rue de l'Arcade
75008 Paris (FR)**

(54) **SYSTEM, COMPUTER PROGRAM PRODUCT AND METHOD FOR DEMONSTRATING RESIDUAL REFLECTION COLOR OF AN INTERFERENTIAL COATING**

(57) The invention concerns a system (100) for a demonstrating residual reflection color, the system comprising : a display device (10) configured to display an image so as to generate a light beam (32), the image having determined colorimetric values (RGB, HSL) corresponding to the residual reflection color of a determined interferential coating and wherein the control unit of the display device (10) is adapted for adjusting the determined colorimetric values of the image displayed on the screen ; a demonstration device (14) including a mirror coating having a mean spectral reflectance higher than or equal to 10 %; the mirror coating of the demonstration device being arranged to receive the light beam generated by the image displayed on the screen with determined colorimetric values under a determined mean angle of incidence, and to generate a reflected beam simulating the residual reflection color of the interferential coating.

**Fig.1**

EP 4 556 876 A1

**Description**

TECHNICAL FIELD OF THE INVENTION

The invention relates to a demonstration tool for various interferential coatings such as antireflective (AR) or mirror coatings on an optical system.

More precisely the invention relates to a device and a method for demonstrating the residual reflection color of such an interferential coating, in particular an AR coating or a mirror coating. The invention also relates to a computer program product for calibrating a device for demonstrating the residual reflection color of such an interferential coating, in particular an AR coating or a mirror coating.

BACKGROUND INFORMATION AND PRIOR ART

It is known to apply an antireflection (AR) coating to an ophthalmic lens so as to reduce the mean reflection factor and therefore to increase the transmittance of the lens. In this way, the eyes of the lens wearer are more visible for an observer and the visual clearance and wear comfort are improved for the wearer. The antireflection coating is generally made of an interferential coating applied on the front face and/or rear face of the lens. The interferential coating comprises a multilayer stack of dielectric layers. The number of layers in the stack is comprised between two and ten and generally between four and six layers. Each layer of the stack and the stack itself has a uniform thickness over the surface area whereon it is deposited.

Each antireflection coating has its own unique residual reflection color. This residual reflection color is perceived by a person who is facing the lens wearer and receives residual light reflected on the antireflection coating.

The residual reflection color may be for example green, blue, yellow (gold), orange, or purple or any other combination of them. Recently, exploration of new colorimetric windows for AR coatings has emerged. A transmission optical system, such as an ophthalmic lens, provided with an antireflection coating commercially available under a given trademark has its own specific residual reflection color.

The residual reflection color of an AR coating may be a decisive factor for consumers to consider when choosing their lenses.

Until now, an eyeglass retailer or eye care professional (ECP) generally presents samples of various AR coatings to the customer in order to demonstrate the residual reflection color of different AR products one by one. However, this demonstration method is not easy and/or time consuming. Moreover, the set of samples of AR coatings available to the ECP for demonstration is generally limited. Samples for AR coatings in new colorimetric windows may not be available.

Concerning the residual reflected color of a mirror coating, the same constraints as for AR coatings mentioned above applies (sample availability, time consuming and/or complex demonstration method) and the color reflected by the mirror coating is even more visible and therefore even more decisive for the wearer's purchase.

One goal of the present invention is to propose a simple device, method and computer program product to visualize instantly the residual reflection color of different interferential coatings.

SUMMARY OF THE INVENTION

Therefore one object of the invention is to provide a system for demonstrating residual reflection color of a determined interferential coating.

The above objects are achieved according to the invention by providing a system comprising:

- a display device comprising a control unit and a screen, the display device being configured to display an image so as to generate a light beam, the image having determined colorimetric values (RGB, HSL) corresponding to the residual reflection color of the determined interferential coating and wherein the control unit is adapted for adjusting the determined colorimetric values of the image displayed on the screen;
- a demonstration device including a mirror coating on an ophthalmic substrate, the mirror coating on the ophthalmic substrate having a mean spectral reflectance over a spectral band from 380 nm to 780 nm higher than or equal to a predetermined reflection threshold of at least 10%, the spectral reflectance presenting a standard deviation of less than 0.2 over the spectral band, the mirror coating of the demonstration device being arranged to receive the light beam generated by the image displayed on the screen with determined colorimetric values under a determined mean angle of incidence, and to generate a reflected beam by reflection on the mirror coating, the reflected beam having a reflection color simulating the residual reflection color of the determined interferential coating; and
- a viewing port arranged to enable a user or a camera to visualize the reflected beam by reflection on the mirror coating of the demonstration device.

According to a particular and advantageous aspect, the control unit comprises means for selecting a screen type among a predetermined list, and calibration means configured for adjusting the determined colorimetric values of the image displayed according to the selected screen type.

According to another particular and advantageous aspect, the mirror coating of the demonstration device comprises a stack of four to ten dielectric layers.

Preferably, the predetermined reflection threshold on the mirror coating is higher than or equal to 15%, 20%, 25% or 30%.

According to a particular aspect, the mirror coating of the demonstration device has a reflection chroma value C* lower than 0.4 in CIEL*a*b* color space, at incidence angle comprised between 0 deg. and 15 deg.

According to an embodiment, the system comprises a white light source for generating a white light beam over the spectral band and a reference lens with an interferential coating, the interferential coating of the reference lens being arranged to receive the white light beam under the determined mean angle of incidence, and to generate a reference reflected beam by reflection on the interferential coating of the reference lens, the reference reflected beam presenting a residual reflection color of the interferential coating of the reference lens and another viewing port arranged to enable the user or the camera to visualize the reference reflected beam; the viewing port and the other viewing port being arranged to enable the user or the camera to visualize side by side the reference reflected beam by reflection on the interferential coating of the reference lens and the reflected beam by reflection on the mirror coating of the demonstration device.

Advantageously, the control unit comprises means to adjust the colorimetric values of the image displayed on the screen so as to reduce a difference between the residual reflection color of the interferential coating of the reference lens and the reflection color of the reflected beam by reflection on the mirror coating of the demonstration device so as to calibrate the determined colorimetric values of the image associated with the reference residual reflection color of the interferential coating of the reference lens.

According to an embodiment, the system comprises a camera arranged to record a model image of the reflected beam by reflection on the mirror coating of the demonstration device and/or a reference image of the reference reflected beam by reflection on the interferential coating of the reference lens.

A further object of the invention is to provide a computer program product comprising instructions which, when the program is executed by a computer, cause the computer to carry out steps, leading to a calibration of a system for demonstrating residual reflection color of a determined antireflection coating by simulating the residual reflection color of the determined interferential coating, said steps comprising:

- acquiring a set of determined colorimetric values, corresponding to the residual reflection color of the determined interferential coating, used for displaying an image on a screen of a display device, said image having the determined colorimetric values;
- acquiring model color coordinates of a reflected light beam formed by reflection of an incident light beam generated by said image displayed on the screen, onto a mirror coating of a demonstration device, at a determined mean angle of incidence;
- acquiring reference color coordinates of a reference reflected beam formed by reflection of a white light beam on an interferential coating of a reference lens having a reference residual reflection color at the determined mean angle of incidence;
- comparing the model color coordinates with the reference color coordinates, and
- if a result of comparing the model color coordinates with the reference color coordinates is below a calibration threshold, saving the determined colorimetric values associated with the reference residual reflection color; or
- if the result of comparing the model color coordinates with the reference color coordinates is above the calibration threshold, iteratively changing the determined colorimetric values of the image displayed on the screen until the result of comparing the model color coordinates with the reference color coordinates is below the calibration threshold, and saving the determined colorimetric values associated with the reference residual reflection color.

Advantageously, the step of acquiring model color coordinates comprises sending instructions for acquiring a model image of the reflected light beam formed by reflection of the incident light beam generated by said image displayed on the screen, onto the mirror coating of the demonstration device, at the determined mean angle of incidence, and determining colorimetric values of the model image.

According to a particular aspect, the step of acquiring model color coordinates comprises sending instructions to a spectrophotometer device for measuring spectrometric data of the incident light beam generated by said image displayed on the screen and comparing the spectrometric data acquired on said display device to reference spectrometric data, and deducing therefrom a step of adjusting the determined RBG values of the image displayed on the screen.

Preferably, the step of acquiring reference color coordinates comprises a step of acquiring a reference image of the reflected light beam formed by reflection of the white light beam on the interferential coating of the reference lens, or a step of retrieving the reference color coordinates from a database.

A further object of the invention is to provide a method for demonstrating residual reflection color of a determined interferential coating comprising the steps of:

- arranging a demonstration device, the demonstration device comprising a mirror coating having a mean spectral reflectance over a spectral band from 380 nm to 780 nm higher than a predetermined reflection threshold of at least 15 %, the mean spectral reflectance presenting a standard deviation of less than 0.2 over the spectral band;
- generating a light beam using an image displayed on a screen of a display device, said image having determined colorimetric values corresponding to a residual reflection color of the determined interferential coating;
- directing the light beam associated with the determined colorimetric values toward the mirror coating of the demonstration device under a determined mean angle of incidence, so as to generate a reflected beam by reflection on the mirror coating, the reflected beam having a reflection color simulating the residual reflection color of the determined interferential coating.

DETAILED DESCRIPTION OF EXAMPLE(S)

The following description with reference to the accompanying drawings will make it clear what the invention consists of and how it can be achieved. The invention is not limited to the embodiment/s illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:

- Figure 1 schematically shows in perspective a system for demonstrating residual reflection color of a determined interferential coating;
- Figure 2 schematically shows a front view of the system for demonstrating residual reflection color of a determined interferential coating of figure 1;

- Figure 3 schematically shows in cross-section the operation of the system for demonstrating residual reflection color;
- Figure 4 schematically shows a system for demonstrating residual reflection color equipped with a camera;
- Figure 5 schematically shows a display device configured to display on a screen an image having determined colorimetric values;
- Figure 6 shows exemplary spectral reflectance of various mirror coating suitable for the demonstration device;
- Figure 7 shows side-by-side two images captured by the camera of the system for demonstrating residual reflection color: a reference image of a reference reflected beam by reflection on a reference lens (left image) and a model image of a reflected beam by reflection on the mirror coating of the demonstration device;
- Figure 8 schematically shows a method for calibrating a system for demonstrating residual reflection color;
- Figure 9 shows a measurement setup used to measure the spectrum of a light beam emitted by the screen of a display device;
- Figure 10 schematically shows exemplary emission spectra of images corresponding to different determined colorimetric values;
- Figure 11 schematically shows an example of measured intensity curves as a function of the red, green and blue colorimetric values for a display device.
- Figure 12 schematically shows a method for calibrating the screen of a mobile display device relatively to the screen of a reference display device for being using in a system for demonstrating residual reflection color according to the present disclosure.

In the description which follows the drawings are not necessary to scale and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features that are defined relative to a device can be transposed, individually or in combination, to a process.

Definitions

The mean visible light reflection factor $R_v$ corresponds to the reflection coefficient integrated over the visible spectrum between 380 nm and 780 nm and weighted by the curve of energy sensitivity of the human eye for a CIE observer over the visible spectrum between 380 nm et 780 nm with a daylight illuminant. More precisely, the mean visible light reflection factor $R_v$ is defined by the following equation:

$$R_v = \frac{\int_{380}^{780} R(\lambda)\, V(\lambda)\, D_{65}(\lambda)\, d\lambda}{\int_{380}^{780} V(\lambda)\, D_{65}(\lambda)\, d\lambda}$$

where $R(\lambda)$ is the reflectance at a wavelength $\lambda$ between 380 nm and 780 nm, $V(\lambda)$ is the eye sensitivity function for a photopic observer in the color space defined by the CIE (Commission on Illumination, in French "Commission Internationale de l'Eclairage") in 1931 and $D65(\lambda)$ is the daylight illuminant defined in the CIE S005/E-1998 standard.

The mean reflection factor $R_m^{380-780}$ in the whole visible light region is defined by the following equation:

$$R_m^{380-780} = \frac{\int_{380}^{780} R(\lambda)\cdot d\lambda}{780-380}$$

## System and method

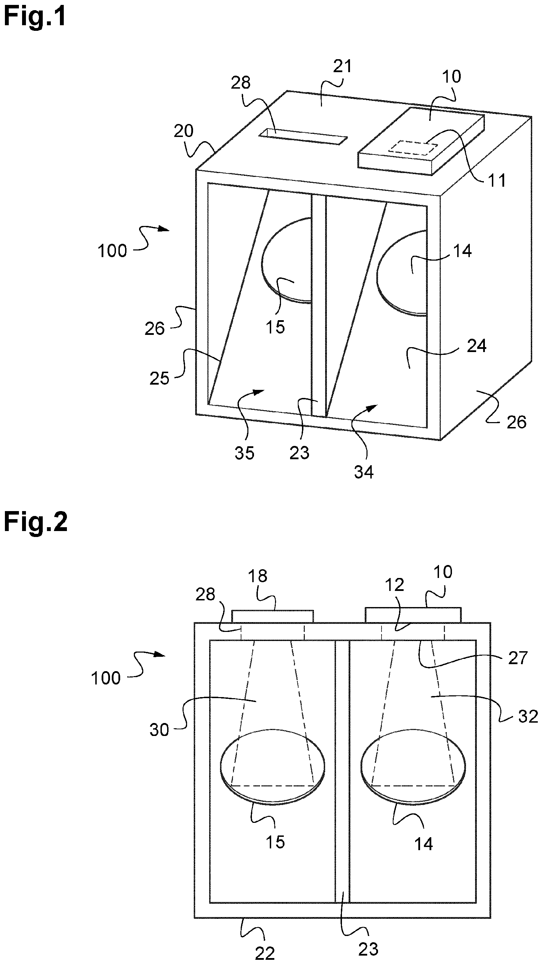

Figures 1-4 schematically show a system 100 for demonstrating residual reflection color of a determined interferential coating. The system 100 comprises a casing 20 having a top 21, a bottom 22 and side walls 26.

According to an embodiment used for calibration, the system 100 comprises a divider 23 separating the casing in two compartments, one for demonstrating residual reflection color of a determined interferential coating and one for calibration of the system. Each compartment comprises a slope 24, respectively 25, arranged so as to form an angle with the bottom 22. The angle between the slope 24, respectively 25, and the bottom 22 is preferably equal to 45 degrees. The top 21 of the casing 20 further comprises a first aperture 27 above the slope 24 and, respectively a second aperture 28 above the slope 25.

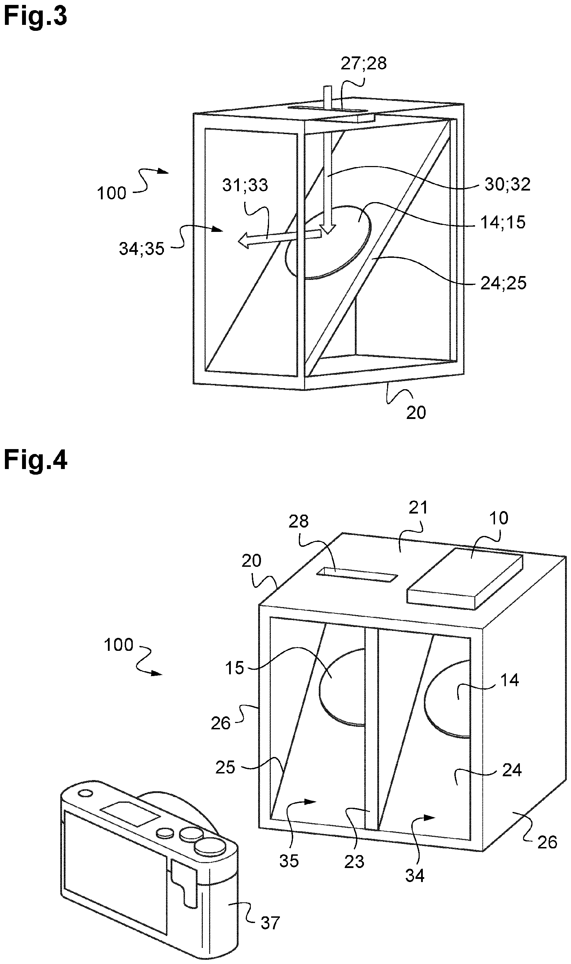

According to another embodiment used only for demonstration, the system 100 comprises only one compartment for demonstrating residual reflection color of a determined interferential coating (see figure 3).

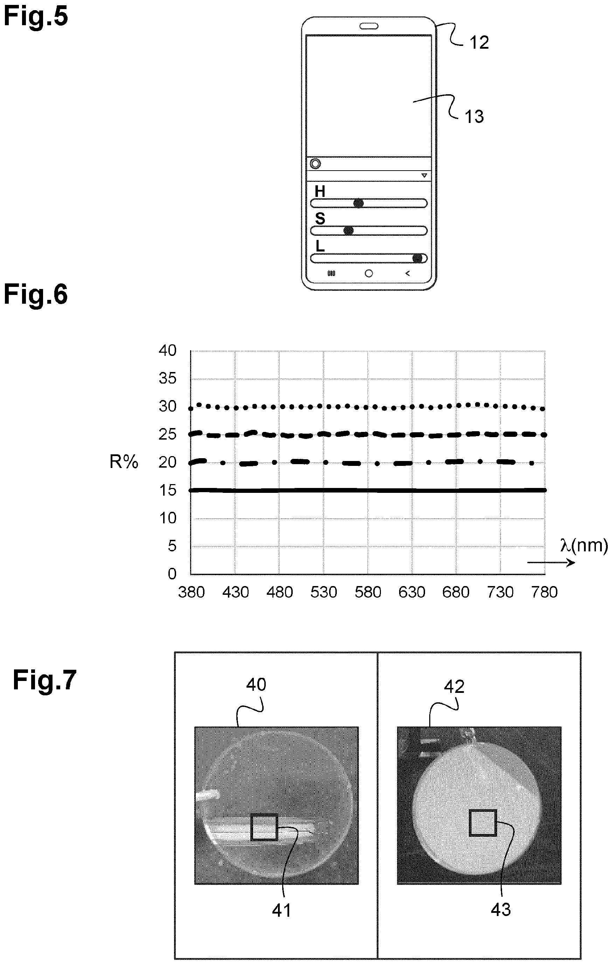

The compartment for demonstrating residual reflection color of a determined interferential coating comprises a demonstration device 14 arranged on the slope 24 and at the vertical under the first aperture 27. The demonstration device 14 comprises a mirror coating on an ophthalmic substrate. The mirror coating of the demonstration device 14 is placed on the side opposite to the slope 24 so that the mirror coating faces the first aperture 27. As detailed below in relation with figure 6, the mirror coating is adapted to present a flat reflectance over the visible spectral range. The demonstration device 14 may have plane surfaces, concave or convex faces or any combination thereof.

A display device 10 is arranged on top of the casing so that its screen 12 faces the first aperture 27 and fully covers the first aperture 27. As described in more details below, the display device 10 is configured to display an image 13 having determined colorimetric values. The display device 10 also comprises an embedded or remote control unit 11 adapted for adjusting the determined colorimetric values of the image 13 displayed on the screen 12. For example, the determined colorimetric values consist in three RGB values in the RGB color space (for red, green and blue), or, alternatively, in three HSL values in the HSL color space (for hue, saturation and lightness). Advantageously, the display device 10 includes an application software comprising means for adjusting the determined colorimetric values, for example by tactile interaction on the screen 12. Alternatively, a computer program on a remote computer is adapted for adjusting the determined colorimetric values of the display device 10. Thus, the display device 10 operates as a tunable light source.

The image 13 displayed on the screen 12 generates a light beam 32 having colorimetric features that depend mainly on the determined colorimetric values applied to generate the image 13. The first aperture 27 is adapted to transmit the light beam 32. The light beam 32 passes through the first aperture 27 in the direction of the demonstration device 14 placed on the slope 24. In other words, the screen 12 projects the light beam 32 on the mirror coating of the demonstration device 14. The slope 24 being tilted by 45 degrees with respect to the bottom 22, the light beam 32 is incident on the demonstration device 14 under a mean angle of incidence of 45 degrees and forms a reflected light beam or reflected beam 33. In this example, the mean angle between the incident light beam 32 and the reflected beam 33 is equal to 90 degrees.

The compartment for demonstrating residual reflection color of a determined interferential coating also comprises a viewing port 34 arranged to enable a user or a camera to visualize the reflected beam 33 formed by reflection of the light beam 32 on the mirror coating of the demonstration device 14. As illustrated on figures 1-3, the viewing port 34 is arranged on a vertical side of the casing facing the slope 24 with the demonstration device 14.

The compartment for calibrating the system 100 comprises a reference lens 15 arranged on the slope 25 and at the vertical under the second aperture 28. The reference lens 15 comprises an interferential coating, such as an anti-reflective coating or a mirror coating, on another ophthalmic substrate. The reference lens may have plane surfaces, concave or convex faces or any combination thereof.

The second aperture 28 is adapted to receive a while light source 18, such as for example a Waldmann lamp SNE136, 36W 220-240V 50/60Hz. For example, the while light source 18 is placed on top of the casing and faces the second aperture 28 so as to cover completely the second aperture 28. The while light source 18 is suitable to emit a white light beam 30 extending continuously over the visible spectral range at least from 380 nm to 780 nm, and preferably from 370 nm to 800 nm. The white light beam 30 passes through the second aperture 28 in the direction of the slope 25. In other words, the while light source 18 projects the white light beam 30 on the reference lens 15. The slope 25 being tilted by 45 degrees with respect to the bottom 22, the white light beam 30 is incident on the reference lens 15 under a mean angle of incidence of 45 degrees and forms a reference reflected light beam or reference reflected beam 31. In this example, the mean angle between the white light beam 30 and the reference reflected beam 31 is equal to 90 degrees.

The compartment for calibrating the system 100 also comprises a viewing port 35 arranged to enable a user or a camera to visualize the reference reflected beam 31 formed by reflection of the white light beam 30 on the interferential coating of the reference lens 15. As illustrated on figure 1, the viewing port 35 is arranged on a vertical side of the casing facing the slope 25 with the demonstration device 15.

Advantageously, the two compartments of the system 100 are arranged side by side and separated by the divider 23. The divider 23 is opaque to the light beams 30, 31, 32, 33. The divider 23 prevents the white light beam 30 from being incident on the demonstration device 14 and prevents the light beam 32 emitted by the screen 12 from being incident on the reference lens 15.

The system 100 for demonstrating residual reflection color enables to form the reflected beam 33 by reflection of the beam 32 emitted by the screen 12 on the demonstration device 14 and to compare it to the reference reflected beam 31 formed by reflection of the white light beam 30 on the interferential coating of the reference lens 15.

The same demonstration device 14 can be used to simulate the reflection of various reference lenses 15 by adjusting the colorimetric values of the image 13 displayed on the screen 12. A viewer gazing at the demonstration device 14 and the reference lens 15 through viewing ports 34, 35 visualizes instantly the residual reflection color of the reference lens 15 and of the demonstration device 14.

The system 100 for demonstrating residual reflection color enables to simulate the reflection of any reference lens 15 with an interferential coating, without knowing the composition of interferential coating or of the substrate.

Figure 4 shows a camera 37 arranged to capture a model image 42 of the reflected beam 31 by reflection on the mirror coating of the demonstration device 14 and/or, respectively, a reference image 40 of the reference reflected beam 33 by reflection on the interferential coating of the reference lens 15.

As illustrated in the example of figure 5, the display device 10 comprises an application software configured to generate an image 13 with determined colorimetric values and to display this image on the screen 12. For example, the determined colorimetric values are defined using colorimetric parameters expressed in the HSL color model, where H represents the hue, S the saturation and L the lightness of the light beam 32 emitted by the image 13 displayed on the screen 12. Alternatively, the determined colorimetric values are defined using colorimetric parameters expressed in the RGB color model for display of images in electronic systems, where R represents a red light beam intensity, B a blue light beam intensity, and G a green light beam intensity, the red light beam, blue light beam and green light beam being added so as to form the light beam 32 emitted by the image 13 displayed on the screen 12. Scroll bars, scroll boxes or sliding bars enable the user to adjust the three HSL values one by one, or, respectively the three RGB values, so as to display an image 13 suitable to generate any desired light beam 32. As illustrated in the example of figure 5, the three scroll bars are arranged directly on the screen 12 of the display device. Complementarily or alternatively, the control unit 11 of the display device enables to adjust the colorimetric parameters expressed in RGB or HSL color model. Thus, the set of color coordinates is flexibly tuned to simulate the residual reflection color of different reference lenses 15. For example, a computer and computer program are used to adjust remotely the colorimetric parameters of the display device 10. The control unit 11 advantageously stores one or a plurality of preset color coordinates. The preset color coordinates are applied to generate a uniform image 13 on the screen 12, which operates as a light source shining on the surface of the demonstration device 14 with a mirror coating having a flat reflection spectrum in the visible spectral range. The system 100 thus enables to simulate the residual reflection color of one or a plurality of known reference lens(es), as disclosed in details below.

Figure 6 shows the reflectance $R(\lambda)$ or reflection spectra of various mirror coatings suitable for the demonstration device 14 as a function of the wavelength $\lambda$ under an angle of incidence of 15 degrees. Each mirror coating comprises a multi-layered stack comprising at least six layers on top of a hardcoat, denoted HC. The hardcoat and the multi-layered stack are arranged on a face of an ophthalmic substrate. The flat spectrum mirror coating is generally based on conventional optical transparent materials (see examples Ex2 to Ex5 below). Such a mirror coating on a clear lens substrate forms a demonstration device 14 suitable to demonstrate reflection color of antireflection coatings on clear lenses. Alternatively, the flat spectrum mirror coating also comprises some light absorbing materials, forming a semi-transparent mirror coating (see example Ex-1 below). Such a mirror coating on a clear or tinted lens substrate forms a demonstration device 14 suitable to demonstrate reflection color of antireflection or mirror coatings of sunglasses. For photochromic lens products, the reflection color in clear and faded states can be demonstrated using the two kinds of mirror coatings, respectively.

The exemplary multilayer high reflection mirror coatings Ex1 to Ex5 with flat reflection spectrum are designed using Essential MacLeod software. The mirror coatings are composed of alternative high optical refractive index ($n \geq 1.55$) and low optical refractive index ($n \leq 1.55$) multilayer materials. The number of layers of these mirror coatings is between four and ten. The total thickness of the multi-layered stack is less than 420 nm. Due to the low intensity of the light beam 32 generated by the screen 12, it is preferable to use a demonstration device 14 having a reflectivity of at least 15% over the visible spectral range. A desired or target level of mean visible light reflection factor $R_T$ is set to at least 10%, and preferably 15% under an angle of incidence of 15 deg. for example $R_T$ is set equal to 15%, 20%, 25% or 30%. Moreover, to obtain a flat reflectance over the visible spectral range, the reflectance is set to be equal to the mean visible light reflection factor $R_T \pm$ 0.1% at each wavelength from 370 nm to 800 nm with a spectral interval of 10 nm, and preferably 5 nm.

According to a first example, denoted Ex1, the mirror coating is semi-transparent, with a mean visible light transmission factor Tv of 29% due to the incorporation of some light absorbing materials in the multi-layered stack. The mirror coating Ex1 has a mean visible light reflection factor Rv of 15% under an angle of incidence of 15 deg. In this first example, Ex1, the demonstration device 14 comprises the multi-layered stack according to the following table I, wherein the layer number is labelled from 1 to 7, along the direction from air to substrate, each layer thickness being in nanometers and wherein Ta2O5 represents tantalum pentoxide, SiO2 represents silicon dioxide, Malbunit represents a mixture of Cr and $SiO_2$ with weight ratio of 50/50, a-Si represents amorphous silicon and Cr represents chromium:

Table I: multilayer coating Ex1

| Layer | Material | Thickness |
|---|---|---|
| 1 | Ta2O5 | 42 |
| 2 | SiO2 | 26 |
| 3 | Ta2O5 | 32 |
| 4 | SiO2 | 16 |
| 5 | Malbunit | 72 |
| 6 | a-Si | 62 |
| 7 | Cr | 5 |
| | HC | |

According to a second example, denoted Ex2, the mirror coating is transparent, with a mean visible light transmission factor Tv of 85% due to the incorporation of transparent materials only in the multi-layered stack. The mirror coating Ex2 has a mean visible light reflection factor Rv of 15%. In this second example, Ex2, the demonstration device 14 comprises the multi-layered stack according to the following table II, wherein the layer number is labelled from 1 to 6, along the direction from air to substrate, each layer thickness being in nanometers and wherein ZrO2 represents zirconium dioxide and SiO2 represents silicon dioxide:

Table II: multilayer coating Ex2

| Layer | Material | Thickness |
|---|---|---|
| 1 | ZrO2 | 82 |
| 2 | SiO2 | 35 |
| 3 | ZrO2 | 22 |
| 4 | SiO2 | 50 |
| 5 | ZrO2 | 12 |
| 6 | SiO2 | 21 |
| | HC | |

According to a third example, denoted Ex3, the mirror coating is transparent and has a mean visible light reflection factor Rv of 20%. In this third example, Ex3, the demonstration device 14 comprises the multi-layered stack according to the following table III, wherein the layer number is labelled from 1 to 8, along the direction from air to substrate, each layer thickness being in nanometers wherein ZrO2 represents zirconium dioxide and SiO2 represents silicon dioxide :

Table III: multilayer coating Ex3

| Layer | Material | Thickness |
|---|---|---|
| 1 | ZrO2 | 72 |
| 2 | SiO2 | 96 |
| 3 | ZrO2 | 6 |
| 4 | SiO2 | 91 |
| 5 | ZrO2 | 11 |
| 6 | SiO2 | 75 |
| 7 | ZrO2 | 6 |
| 8 | SiO2 | 42 |
| | HC | |

According to a fourth example, denoted Ex4, the mirror coating is transparent and has a mean visible light reflection factor Rv of 25%. In this fourth example, Ex4, the demonstration device 14 comprises the multi-layered stack according to the following table IV, wherein the layer number is labelled from 1 to 8, along the direction from air to substrate, each layer thickness being in nanometers wherein Ta2O5 represents tantalum pentoxide and SiO2 represents silicon dioxide

Table IV: multilayer coating Ex4

| Layer | Material | Thickness |
|---|---|---|
| 1 | SiO2 | 55 |
| 2 | Ta2O5 | 60 |
| 3 | SiO2 | 81 |
| 4 | Ta2O5 | 78 |
| 5 | SiO2 | 15 |
| 6 | Ta2O5 | 50 |
| 7 | SiO2 | 53 |
| 8 | Ta2O5 | 11 |
| | HC | |

According to a fifth example, denoted Ex5, the mirror coating is transparent and has a mean visible light reflection factor Rv of 30%. In this fifth example, Ex5, the demonstration device 14 comprises the multi-layered stack according to the following table V, wherein the layer number is labelled from 1 to 9, along the direction from air to substrate, each layer thickness being in nanometers wherein Ta2O5 represents tantalum pentoxide and SiO2 represents silicon dioxide :

Table V: multilayer coating Ex5

| Layer | Material | Thickness |
|---|---|---|
| 1 | Ta2O5 | 62 |
| 2 | SiO2 | 98 |
| 3 | Ta2O5 | 25 |
| 4 | SiO2 | 19 |

(continued)

| Layer | Material | Thickness |
|-------|----------|-----------|
| 5 | Ta2O5 | 78 |
| 6 | SiO2 | 24 |
| 7 | Ta2O5 | 24 |
| 8 | SiO2 | 54 |
| 9 | Ta2O5 | 6 |
| | HC | |

The mirror coatings Ex1 to Ex5 present flat reflection spectra (see figure 6) with various levels of mean reflection factor $R_m^{380-780}$ in the whole visible light region, standard deviation of reflectivity, denoted S.D., and reflection chroma value C* at incident angles comprised between 0 and 15 degrees of the as-designed flat spectrum mirror coatings. The features of the mirror coatings Ex1 to Ex5 are summarized in the following table VI :

Table VI: comparison of mean reflection factor, standard deviation of reflectivity and chroma value for the mirror coatings Ex1 to Ex5

| | Ex-1 | Ex-2 | Ex-3 | Ex-4 | Ex-5 |
|---|------|------|------|------|------|
| $R_m^{380-780}$ (%) | 15.05 | 15.00 | 20.02 | 25.01 | 29.99 |
| S. D. | 0.08 | 0.03 | 0.17 | 0.14 | 0.17 |
| C* | 0.11 | 0.17 | 0.33 | 0.30 | 0.31 |

The standard deviation of reflectivity, S.D., is defined by the following equation:

$$S.D. = \sqrt{\frac{\sum_{\lambda=380}^{780} ( R_\lambda - R_m^{380-780})^2}{780-380}}$$

The standard deviation of reflectivity S.D. is set in the design software to be less than 0.2. The reflection chroma value C* in CIE L*a*b* color space of the as-designed flat spectrum mirror coating is set in the design software to be less than 0.4.

We will now describe how to use the system 100 to calibrate the color coordinates of the image 13 displayed on the screen 12 so as to simulate the residual reflection color of a specific reference lens 15.

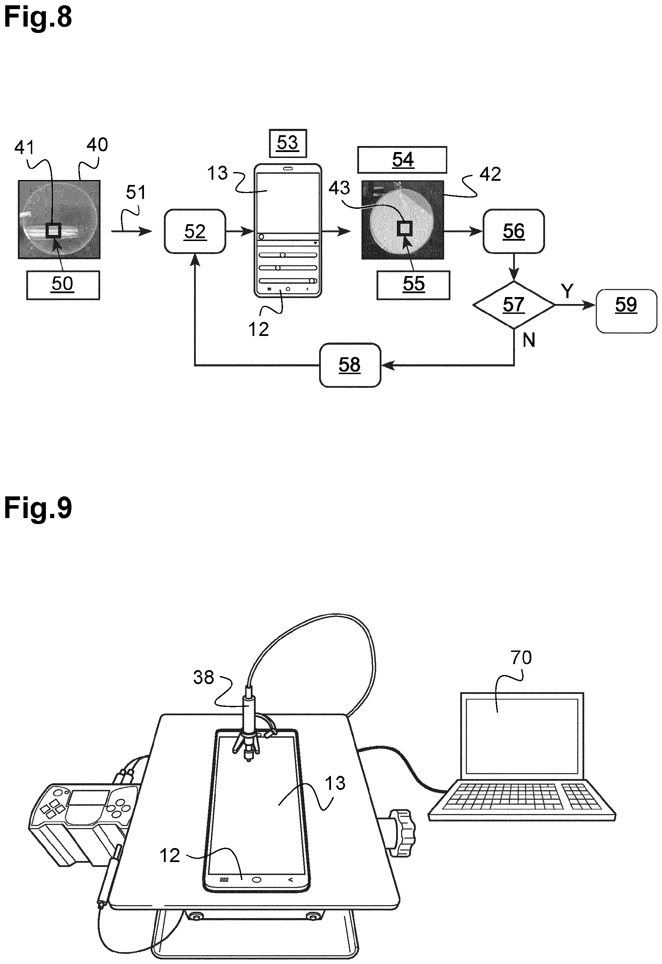

A reference lens 15 and a demonstration device 14 are placed in the system 100 for demonstrating residual reflection color as described in relation with figures 1, 2 and 4. The reference lens 15 comprises an interferential coating, such as an anti-reflective coating on a lens substrate. The demonstration device 14 comprises for example the flat spectrum mirror coating Ex2 with a mean reflection factor of 15%. The demonstration device 14 is placed on the slope 24 so that the mirror coating Ex2 faces the first aperture 27 to receive the light beam 32 emitted by the screen 12. Similarly, the reference lens 15 is placed on the slope 25 so that the interferential coating faces the second aperture 28 to receive the light beam 30 emitted by the white light source 18. Thus a viewer visualizes simultaneously the reference reflected beam 31 formed by reflection of the white light beam 30 on the interferential coating of the reference lens 15 and the reflected beam 33 formed by reflection of the light beam 32 generated by the screen 12 on the mirror coating of the demonstration device 14. The reference reflected beam 31 presents a residual reflection color depending on the interferential coating of the reference lens 15. The viewer may adjust the colorimetric values, for example HSL, of the screen 12 so as to obtain a similar residual reflection color by reflection on the reference lens 15 and on the demonstration device 14. The calibration is done when the residual reflection color by reflection on the demonstration device 14 is very close for the observer to that on the reference lens 15. This process enables to determine preset colorimetric values enabling to simulate the residual reflection color of the specific reference lens using the specific demonstration device 14 and the specific screen 12. This process is repeated for as many reference lenses 15 with various interferential coatings for determining the corresponding preset colorimetric values. The set of preset colorimetric values corresponding to a set of determined interferential coatings is advantageously stored in the control unit 11 of the display device. Alternatively, the determination of preset colorimetric values is made automatically using a camera 37 and a dedicated application software or computer program controlling the screen 12 (see figure 8).

Figure 7 shows, on the right side, a model image 42 taken by the camera 37 of the reflected beam 33 formed by reflection on the mirror coating of the demonstration device 14 with the flat spectrum mirror coating, for example Ex2, having a mean visible light reflection factor of 15%. Figure 7 also shows, on the left side, a reference image 40 taken by the camera 37 of the reflected beam 31 formed by reflection on the reference lens 15 with an interferential coating. The white light source has here a rectangular shape. The multiple reflections on the front and back sides of the reference lens 15 are observed on the reference image 40 of figure 7. A region of interest 43, respectively 41, is selected in the model image 42, respectively in the reference image 40. The regions of interest correspond to similar areas of the demonstration device 14 and of the reference lens 15. The region of interest 41 is selected to include the main reflection on the interferential coating of the reference lens 15. A mobile application software or a computer program is configured to compare the colorimetric values of the two regions of interest 43 and 41. More precisely, the application software or computer program compares a difference between the colorimetric values of the two regions of interest 43 and 41 to a predetermined threshold value. The computer program is also adapted to adjust the colorimetric values, for example in HSL coordinates, of the screen 12 so as to minimize the difference in colorimetric values between the two regions of interest 43 and 41. This computer program enables to determine preset colorimetric values enabling to simulate the residual reflection color of the specific reference lens 15 using the specific demonstration device 14, here with the Ex2 mirror coating, and the specific screen 12 used.

For comparison, similar tests are made using a demonstration device with a flat spectrum mirror coating having a mean visible light reflection factor of only 5%. However, the results of these tests show that the mirror coating with mean visible light reflection factor of 5% produces a weak reflection which is inadequate to represent the residual reflection color of most antireflection coatings. A mirror coating with mean visible light reflection factor of 10% is sufficient to represent the residual reflection color of many interferential coatings. The demonstration device 14 have a mean visible light reflection factor of at least 10% and preferably 15%.

Figure 8 schematically shows a method for calibrating a system 100 for demonstrating residual reflection color of a specific reference lens 15 using a specific screen 12 and a specific demonstration device 14. In a first step 50, the camera 37 acquires a reference image 40 of the reflected beam 31 formed by reflection on the reference lens 15 with an interferential coating, for example an anti-reflective coating. A region of interest 41 including the main reflection of the white light beam on the anti-reflective coating of the reference lens 15 is selected in the reference image 40. The first step 50 includes determination of the colorimetric values, for example in RGB coordinates, of the region of interest 41. At step 51, the colorimetric values determined at step 50, are used to guess initial colorimetric values for the image 13 to be displayed on the screen 12. At step 52, the initial colorimetric values are input into the computer program. Step 53 includes generation of an image 13 on the screen of the display device 10 with the colorimetric values set at step 52. Step 54 includes illumination of the demonstration device 14 in the system 100 using the light beam 32 generated by the screen 12 with the colorimetric values set at step 52. Step 55 includes acquisition by the camera 37 of a model image 42 of the reflected beam 33 formed by reflection on the demonstration device 14, selection of a region of interest 43 in the model image 42 and determination of the colorimetric values, for example in RGB coordinates, of the region of interest 43. Step 56 includes calculation of a difference between the colorimetric values, here in RGB coordinates, of the regions of interest 41 and 43. Step 57 includes a comparison of the difference between the colorimetric values determined at step 56 with a predetermined threshold. If the difference is under the threshold, the error is adequately small and the colorimetric values associated with the specific reference lens 15 are stored at step 59. If the difference is above the threshold, the process resumes with step 58 including an adjustment of the colorimetric values of the image 13 to be displayed on the screen which are input at step 52. Iteratively, the process enables to determine precisely the colorimetric values of the image 13 enabling to simulate the residual reflection color on the reference lens 15.

Advantageously, the calibration process to determine the colorimetric values of the image 13 to be reflected on a demonstration device 14 is performed only once for each reference lens 15. These values are stored in the control unit 11 of the display device. For demonstrating the residual reflection color of a reference lens 15, an eye care professional only needs the demonstration device 14 and the screen 12 configured to display the preset colorimetric values to enable visualization of the residual reflection color. For this demonstration, the eye care professional does not need to have a sample of each reference lens 15. Thus, the method for simulating the residual reflection color of a reference lens cuts down the costs of storing many sample reference lenses. Moreover, this method is easy to implement anywhere and saves time.

Nevertheless, it is observed that the residual reflection color formed by reflection of the light beam generated by an image 13 displayed on the screen 12 also depends on the type of screen 12 used. Indeed, applying the same colorimetric values in RGB coordinates to various screens produces images and light beams presenting visually slightly different colors. According to an aspect of the present disclosure, a color calibration of the screen is performed in order to adjust the colorimetric values of the image as a function of the type of screen used in the system 100 for demonstrating residual reflection color.

Figure 9 shows an example of a measurement setup used to measure the spectrum of a light beam emitted by an image 13 displayed on the screen 12 of a display device, for example a mobile phone. The measurement setup includes a fiber optic cable 38 arranged to collect a part of the beam 32 emitted by the screen using determined colorimetric values.

The fiber optic cable 38 has for example a diameter of 400 micrometers and is placed about 2,5 cm above the screen 12. The measurement setup includes a spectrometer, for example Jaz by Ocean optics, with an integration time of 60 ms, to detect and analyze the collected beam as a function of wavelength. The measurement setup also includes a computer 70 and a computer program controlling the colorimetric values of the image 13 displayed on the screen 12 and controlling the spectrometer. Different types of mobile phones are tested using the same measurement setup, for example Screen#1 (Huawei Mate 10 Pro), Screen#2 (Samsung Galaxy S22) and Screen#3 (Apple iPhone 14).

For each type of screen, the initial colorimetric values are set to (255, 255, 255) in RGB color coordinates using a conventional mobile application software. The spectrometer enables to detect three main peak intensities in the measured spectra. The different screens show similar emission peak wavelengths at about 461 nm $\pm 2$ nm, 528 nm $\pm 2$ nm and 623 nm $\pm 1$ nm. Then, the emission peaks are recorded using only one of the RGB color coordinates (the two other being set to 0 value) for the image displayed on the screen. As illustrated in the following table VII, some secondary peaks are observed using Screen #1 and Screen #3 even if only one of the RGB color coordinates is used.

Table VII : measured emission peaks for three different screens depending as a function of the enabled R,G,B color

| RGB settings | Screen #1 | | Screen #2 | | Screen #3 | |
|---|---|---|---|---|---|---|
| | Primary peak | secondary peak | Primary peak | secondary peak | Primary peak | secondary peak |
| R only | 622 | - | 622 | - | 624 | 526 |
| G only | 530 | 622 | 526 | - | 526 | 460, 624 |
| B only | 459 | - | 463 | - | 460 | - |

This result shows that the RGB color coordinates do not control independently the red, blue and green emission in the generated light beam 32.

For example Screen #1 is used as a reference screen, and the Screen #2 and Screen #3 are calibrated so that their emission spectra match the emission spectra of the Screen #1, using the following screen color calibration process.

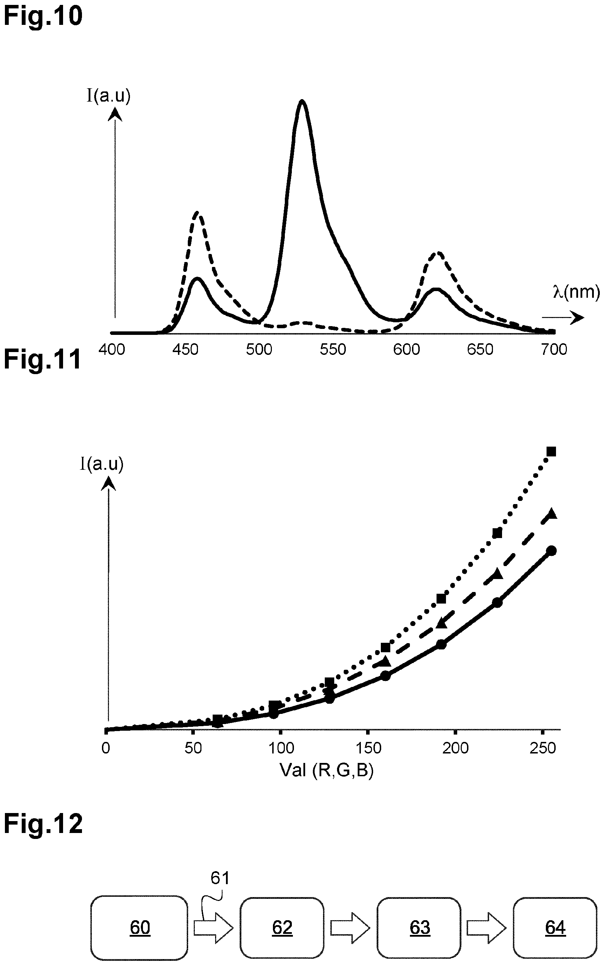

Figure 10 shows two emission spectra measured using the measurement setup of figure 9 and the Screen #1 with the RGB colorimetric values set to (131, 219, 154) for the plain line spectrum and respectively with the RGB colorimetric values set to (190, 60, 195) for the dashed line spectrum. These two sets of colorimetric values enable to simulate two different reference lenses (for example a Crizal lens and a Preventia lens).

For screen color calibration, each individual R, G, B value is set independently on the test screen at discrete values of 64, 96, 128, 160, 192, 224 and 255. The spectrum corresponding to each value is recorded and the intensity values at the peak emission wavelengths are extracted, for example using third order polynomial fitting, as illustrated on figure 11 for Screen#1. In particular, Screen #2 presents a more complex profile with multiple secondary peaks in the RGB emission spectra. The fitted parameters enable to determine the resultant intensity values of the emission spectra of each screen for any arbitrary RGB values. Thus, the fitted parameters are used to calibrate each screen in order to generate the same spectra as the reference screen, here Screen#1. In particular, this calibration enables to determine the RGB colorimetric values for each screen enabling to generate the same emission spectra as illustrated on figure 10 with the RGB values of Screen#1.

The following Table VIII shows the corresponding RGB values for each screen enabling to generate the two emission spectra illustrated on figure 10.

Table VIII : RGB values for generating the emission spectra illustrated on figure 10

| | RGB on Screen #1 | RGB on Screen #2 | RGB on Screen #3 |
|---|---|---|---|
| spectrum 1 | (131, 219, 154) | (133, 216, 130) | (89, 227, 137) |
| spectrum 2 | (190, 60, 195) | (168, 57, 182) | (193, 40, 215) |

Based on the calibrated RGB values of the Table VIII, the various screens are used to generate the emission beams corresponding to the two emission spectra illustrated on figure 10. When observed directly, the screens configured to display an image having the respective RGB color coordinates present an image having visually similar colors. Before calibration, the emission spectra of the various screens with the same RGB values show significant differences in peak position and/or peak intensities. After calibration, the emission spectra of the various screens are almost perfectly superimposed for each simulated spectrum 1 or spectrum 2.

Furthermore, each screen is arranged in the system 100 to simulate the residual reflection color using the calibrated RGB values of Table VIII of each reference lens on the demonstration device 14, and to compare visually or using the camera and an associated computer program, the color of the reflected beam with the residual reflection on the actual reference lens 15. The results show that the calibrated screen colors of the screen#2 and screen#3 can adequately be used to match the response of the reference screen#1. This method is easily adapted to calibrate any type of screen with respect to the reference screen. Thus, the end user can use any type of screen to simulate the residual reflection color of a known reference lens on a demonstration device 14, provided that the emission spectra of the screen is calibrated with respect to a reference screen.

Figure 12 schematically shows the main steps of a method of calibration according to the present disclosure. Step 60 comprises acquisition of a set of reference colorimetric values representing the residual reflection color of a reference lens with a determined interferential coating, suitable for generating an image on a first screen of a display device, said image having the set of reference colorimetric values. The set of reference colorimetric values 61 is stored and transmitted to be applied to a second screen. The emission spectra of the first screen and of the second screen with the same set of reference colorimetric values are recorded at step 62. Step 63 comprises a calculation of a difference between the two emission spectra recorded at step 62 and deducing therefrom a new set of colorimetric values to be applied to the second screen. When the difference between the two emission spectra is below a predetermined threshold, the new set of colorimetric values is applied to the second screen at step 64. This method enables calibrating the colorimetric values of the screen of a mobile display device relatively to the screen of a reference display device, for being using in a system 100 for demonstrating residual reflection color as disclosed above.

Thus, the preset color coordinates representing the residual reflection color of any reference lenses can be simulated accurately using any type of screen.

## Claims

1. A system for demonstrating residual reflection color of a determined interferential coating, the system comprising:

   - a display device comprising a control unit and a screen, the display device being configured to display an image so as to generate a light beam, the image having determined colorimetric values (RGB, HSL) corresponding to the residual reflection color of the determined interferential coating and wherein the control unit is adapted for adjusting the determined colorimetric values of the image displayed on the screen;
   - a demonstration device including a mirror coating on an ophthalmic substrate, the mirror coating on the ophthalmic substrate having a mean spectral reflectance over a spectral band from 380 nm to 780 nm higher than or equal to a predetermined reflection threshold of at least 10 %, the spectral reflectance presenting a standard deviation of less than 0.2 over the spectral band;
   - the mirror coating of the demonstration device being arranged to receive the light beam generated by the image displayed on the screen with determined colorimetric values under a determined mean angle of incidence, and to generate a reflected beam by reflection on the mirror coating, the reflected beam having a reflection color simulating the residual reflection color of the determined interferential coating;
   - a viewing port arranged to enable a user or a camera to visualize the reflected beam by reflection on the mirror coating of the demonstration device.

2. The system according to claim 1 wherein the control unit comprises means for selecting a screen type among a predetermined list, and calibration means configured for adjusting the determined colorimetric values of the image displayed according to the selected screen type.

3. The system according to claim 1 or 2 wherein the mirror coating of the demonstration device comprises a stack of four to ten dielectric layers.

4. The system according to any one of claims 1 to 3 wherein the predetermined reflection threshold on the mirror coating is higher than or equal to 15%, 20%, 25% or 30%.

5. The system according to any one of claims 1 to 4 wherein the mirror coating of the demonstration device has a reflection chroma value C* lower than 0.4 in CIEL*a*b* color space, at incidence angle comprised between 0 deg. and 15 deg.

6. The system according to any one of claims 1 to 5 comprising a white light source for generating a white light beam over the spectral band and a reference lens with an interferential coating, the interferential coating of the reference lens being arranged to receive the white light beam under the determined mean angle of incidence, and to generate a reference reflected beam by reflection on the interferential coating of the reference lens, the reference reflected beam presenting a residual reflection color of the interferential coating of the reference lens and another viewing port arranged to enable the user or the camera to visualize the reference reflected beam ;

- the viewing port and the other viewing port being arranged to enable the user or the camera to visualize side by side the reference reflected beam by reflection on the interferential coating of the reference lens and the reflected beam by reflection on the mirror coating of the demonstration device.

**7.** The system according to claim 6 wherein the control unit comprises means to adjust the colorimetric values of the image displayed on the screen so as to reduce a difference between the residual reflection color of the interferential coating of the reference lens and the reflection color of the reflected beam by reflection on the mirror coating of the demonstration device so as to calibrate the determined colorimetric values of the image associated with the reference residual reflection color of the interferential coating of the reference lens.

**8.** The system according to any one of claims 1 to 7 comprising a camera arranged to record a model image of the reflected beam by reflection on the mirror coating of the demonstration device and/or a reference image of the reference reflected beam by reflection on the interferential coating of the reference lens.

**9.** A computer program product comprising instructions which, when the program is executed by a computer, cause the computer to carry out steps, leading to a calibration of a system for demonstrating residual reflection color of a determined antireflection coating by simulating the residual reflection color of the determined interferential coating, said steps comprising :

- acquiring a set of determined colorimetric values, corresponding to the residual reflection color of the determined interferential coating, used for displaying an image on a screen of a display device, said image having the determined colorimetric values ;
- acquiring model color coordinates of a reflected light beam formed by reflection of an incident light beam generated by said image displayed on the screen, onto a mirror coating of a demonstration device, at a determined mean angle of incidence;
- acquiring reference color coordinates of a reference reflected beam formed by reflection of a white light beam on an interferential coating of a reference lens having a reference residual reflection color at the determined mean angle of incidence;
- comparing the model color coordinates with the reference color coordinates, and
- if a result of comparing the model color coordinates with the reference color coordinates is below a calibration threshold, saving the determined colorimetric values associated with the reference residual reflection color; or
- if the result of comparing the model color coordinates with the reference color coordinates is above the calibration threshold, iteratively changing the determined colorimetric values of the image displayed on the screen until the result of comparing the model color coordinates with the reference color coordinates is below the calibration threshold, and saving the determined colorimetric values associated with the reference residual reflection color.

**10.** The computer program product according to claim 9 wherein the step of acquiring model color coordinates comprises sending instructions for acquiring a model image of the reflected light beam formed by reflection of the incident light beam generated by said image displayed on the screen, onto the mirror coating of the demonstration device, at the determined mean angle of incidence, and determining colorimetric values of the model image.

**11.** The computer program product according to claim 9 wherein the step of acquiring model color coordinates comprises sending instructions to a spectrophotometer device for measuring spectrometric data of the incident light beam generated by said image displayed on the screen and comparing the spectrometric data acquired on said display device to reference spectrometric data, and deducing therefrom a step of adjusting the determined RBG values of the image displayed on the screen.

**12.** The computer program product according to any one of claim 9 to 11 wherein the step of acquiring reference color coordinates comprises a step of acquiring a reference image of the reflected light beam formed by reflection of the white light beam on the interferential coating of the reference lens, or a step of retrieving the reference color coordinates from a database.

**13.** A method for demonstrating residual reflection color of a determined interferential coating comprising the steps of:

- arranging a demonstration device, the demonstration device comprising a mirror coating having a mean spectral reflectance over a spectral band from 380 nm to 780 nm higher than a predetermined reflection threshold of at least 15 %, the mean spectral reflectance presenting a standard deviation of less than 0.2 over the spectral band;

- generating a light beam using an image displayed on a screen of a display device, said image having determined colorimetric values corresponding to a residual reflection color of the determined interferential coating;

- directing the light beam associated with the determined colorimetric values toward the mirror coating of the demonstration device under a determined mean angle of incidence, so as to generate a reflected beam by reflection on the mirror coating, the reflected beam having a reflection color simulating the residual reflection color of the determined interferential coating.

# Fig.1

# Fig.2

# Fig.3

27;28

100

31;33

34;35

30;32

14;15

24;25

20

# Fig.4

28

21

10

20

100

15

14

26

25

24

26

35

23

34

37

Fig.5

Fig.6

Fig.7

# Fig.8

# Fig.9

**Fig.10**

**Fig.11**

**Fig.12**

Europäisches
Patentamt

European
Patent Office

Office européen
des brevets

# EUROPEAN SEARCH REPORT

Application Number

EP 23 30 6971

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/094575 A1 (CRAIN BRIAN W [US]) 24 April 2008 (2008-04-24) * abstract; figures * | 1-13 | INV. G01M11/02 A61B3/00 A61B3/04 |
| X | US 2006/087618 A1 (SMART PAULA [GB] ET AL) 27 April 2006 (2006-04-27) * paragraph [0091] - paragraph [0100]; figures * | 1,3-5 | |
| X | US 2012/307203 A1 (VENDEL JOAR [SE] ET AL) 6 December 2012 (2012-12-06) * column 20 - column 84; figure 3 * | 1-5 | |
| X | US 9 149 185 B2 (TABOR KENT [US]; VISION ASSESSMENT CORP [US]) 6 October 2015 (2015-10-06) * column 4, line 40 - column 8, line 8; figures * | 1,8 | |

TECHNICAL FIELDS
SEARCHED (IPC)

G01M
A61B

The present search report has been drawn up for all claims

| Place of search | Date of completion of the search | Examiner |
|---|---|---|
| The Hague | 24 April 2024 | Amroun, Sébastien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 30 6971

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2024

| Patent document cited in search report | Publication date | Patent family member(s) | Publication date |
|---|---|---|---|
| US 2008094575 A1 | 24-04-2008 | CA 2581182 A1 | 30-03-2006 |
| | | CN 101522093 A | 02-09-2009 |
| | | EP 1806998 A1 | 18-07-2007 |
| | | JP 2008513843 A | 01-05-2008 |
| | | US 2008094575 A1 | 24-04-2008 |
| | | WO 2006034362 A1 | 30-03-2006 |
| US 2006087618 A1 | 27-04-2006 | AU 2003229979 A1 | 17-11-2003 |
| | | DK 1509121 T3 | 14-01-2013 |
| | | EP 1509121 A1 | 02-03-2005 |
| | | ES 2396864 T3 | 28-02-2013 |
| | | JP 2005524432 A | 18-08-2005 |
| | | PT 1509121 E | 15-01-2013 |
| | | US 2006087618 A1 | 27-04-2006 |
| | | WO 03092482 A1 | 13-11-2003 |
| US 2012307203 A1 | 06-12-2012 | DK 2506754 T3 | 08-12-2014 |
| | | EP 2329761 A1 | 08-06-2011 |
| | | EP 2506754 A1 | 10-10-2012 |
| | | US 2012307203 A1 | 06-12-2012 |
| | | WO 2011067361 A1 | 09-06-2011 |
| US 9149185 B2 | 06-10-2015 | CN 104010564 A | 27-08-2014 |
| | | EP 2768382 A1 | 27-08-2014 |
| | | US 2013100401 A1 | 25-04-2013 |
| | | US 2014313486 A1 | 23-10-2014 |
| | | WO 2013059812 A1 | 25-04-2013 |

EPO FORM P0459

For more details about this annex : see Official Journal of the European Patent Office, No. 12/82